# EUROPEAN PATENT SPECIFICATION

(11) **EP 4 540 120 B1**
(45) Date of publication and mention of the grant of the patent: **22.04.2026**
(21) Application number: 23730558.6
(22) Date of filing: 30.05.2023
(51) Int. Cl.: B60W 60/00

(54) **A COMPUTER-IMPLEMENTED METHOD OF DETERMINING A TRAJECTORY OF AN AUTONOMOUS VEHICLE**
COMPUTERIMPLEMENTIERTES VERFAHREN ZUR BESTIMMUNG EINER TRAJEKTORIE EINES AUTONOMEN FAHRZEUGS
PROCÉDÉ MIS EN OEUVRE PAR ORDINATEUR POUR DÉTERMINER UNE TRAJECTOIRE D'UN VÉHICULE AUTONOME

(30) Priority: 20.06.2022 GB 202209025
(43) Date of publication of application: 23.04.2025
(73) Proprietor: Oxa Autonomy Ltd, Oxford OX4 2HW (GB)
(72) Inventor: STEWART, Alex, Oxford Oxfordshire OX4 2HW (GB); TONG, Chi Hay, Oxford Oxfordshire OX4 2HW (GB)
(74) Representative: Appleyard Lees IP LLP
(86) International application number: PCT/GB2023/051419
(87) International publication number: WO 2023/247924

(56) References cited:
- WO-A1-2019/140367
- WO-A1-2021/071810
- US-A1- 2021 009 119

## Description

### FIELD

The subject-matter of the invention relates to a trajectory of a vehicle, in particular an autonomous vehicle (AV).

### BACKGROUND

An autonomous vehicle requires trajectory planning in order to control an AV to move along a path.

Conventional approaches to trajectory planning result in myriad possible trajectories, each associated with a local optimum. In certain circumstances, identifying a global optimum may not be possible, especially when operating in real time with a finite decision-making time to obtain the optimal trajectory.
Prior art also includes WO2019140367A1 which describes autonomous vehicle systems and methods that include or otherwise leverage a motion planning system that generates constraints as part of determining a motion plan for an autonomous vehicle. In particular, WO2019140367A1 describes a scenario generator within a motion planning system can generate constraints based on where objects of interest are predicted to be relative to an autonomous vehicle. A constraint solver can identify navigation decisions for each of the constraints that provide a consistent solution across all constraints. The solution provided by the constraint solver of WO2019140367A1 can be in the form of a trajectory path determined relative to constraint areas for all objects of interest. The trajectory path of WO2019140367A1 represents a set of navigation decisions such that a navigation decision relative to one constraint doesn't sacrifice an ability to satisfy a different navigation decision relative to one or more other constraints.
Prior art also includes WO2021071810A1 which describes systems and methods of manoeuvring an autonomous vehicle in a local region using topological planning, while traversing a route to a destination location, are disclosed. The system of WO2021071810A1 includes an autonomous vehicle including one or more sensors and a processor. The processor is configured to determine the local region on the route and receive real-time information corresponding to the local region. The processor of WO2021071810A1 performs topological planning to identify on or more topologically distinct classes of trajectories, compute a constraint set for each of the one or more topologically distinct classes of trajectories, optimize a trajectory to generate a candidate trajectory for each constraint set, and select a trajectory for the autonomous vehicle to traverse the local region from amongst the one or more candidate trajectories. Each of the one or more topologically distinct classes of WO2021071810A1 is associated with a plurality of trajectories that take the same combination of discrete actions with respect to objects in the local region.
Prior art also includes US2021009119A1 which describes a method for controlling a motor vehicle traveling on a road in a current lane. The road has at least one further lane which is adjacent to the current lane of the motor vehicle. The method comprises the following steps: A driving maneuver graph is generated and/or received, which contains information about at least two different driving maneuvers for the motor vehicle. One of the at least two possible driving maneuvers of US2021009119A1 is selected by means of a machine learning module which applies a machine learning method to the driving maneuver graph. A control device for a system for the control of a motor vehicle is also proposed in US2021009119A1.

The subject-matter of the invention aims to alleviate such problems and improve on the prior art.

### SUMMARY

According to the present invention as defined in claim 1, there is provided a computer-implemented method of determining a trajectory of an autonomous vehicle, the method comprising: receiving a candidate path for the autonomous vehicle to travel, and positional information of one or more objects; determining a plurality of passing strategies, each passing strategy comprising a passing action defining how the autonomous vehicle is constrained to pass the or each object; ranking the plurality of passing strategies; and determining a trajectory along the path for a highest ranked passing strategy. In this way, a globally optimum trajectory can be obtained more quickly.

In an embodiment, wherein the passing action includes a constraint to pass ahead of or pass behind an object of the one or more objects.

In an embodiment, exhaustive combinations of passing actions form the passing strategies.

According to the invention as defined in claim 1, the determining the plurality of passing strategies comprises constructing, for each passing strategy, a polygon in space-time, wherein the polygon comprises one or more boundary lines formed from intersection points of the autonomous vehicle with the or each object, wherein the polygon is a travel envelope for the autonomous vehicle.

According to the invention as defined in claim 1, the computer-implemented method further comprises determining one or more unreachable regions of the polygon, wherein an unreachable region is a region of the polygon that the autonomous vehicle is unable to reach.

In an embodiment, the or each unreachable region is determined based on kinodynamic constraints of the autonomous vehicle.

In an embodiment, the kinodynamic constraints include one or more from a list including: maximum speed, maximum acceleration, and maximum deceleration.

According to the invention as defined in claim 1, the method further comprises shrinking the polygon to exclude the or each unreachable region.

In an embodiment, ranking the passing strategies comprises comparing geometric features of each polygon and ranking the passing strategies based on the comparisons.

In an embodiment, the geometric features include an area of the polygon and a width of a pinch point.

In an embodiment, the computer-implemented method further comprises disregarding a passing strategy as infeasible when the respective polygon does not include the origin.

In an embodiment, the positional information includes a predicted trajectory of the object.

According to a further aspect of the present invention as defined in claim 10, there is provided a transitory or non-transitory computer-readable medium, including instructions stored thereon that, when executed by a processor, cause the processor to perform the method as defined in claim 1, as described in the preceding paragraphs.

According to a further aspect of the present invention as defined in claim 1, there is provided an autonomous vehicle, comprising: a processor; a storage medium having instructions stored thereon that, when executed by the processor, cause the processor to perform the method as defined in claim 1, as described in the paragraphs included above; and one or more actuators configured to manoeuvre the autonomous vehicle along the trajectory.

### BRIEF DESCRIPTION OF DRAWINGS

The embodiments described herein are best understood with reference to the accompanying figures, in which:
Figure 1 shows a schematic diagram of an AV according to one or more embodiments;
Figure 2 shows a block diagram of a trajectory planner for performing various functions according to one or more embodiments;
Figure 3 shows a schematic view of a candidate path of an AV determined by the trajectory planner of Figure 1;
Figure 4 shows a path translated into a space-time graph by the trajectory planner of Figure 1;
Figure 5 shows another schematic view of another candidate path of an AV determined by the trajectory planner of Figure 1;
Figure 6 a shows an intersection point between the AV and an object determined by the trajectory planner of Figure 1, Figure 6b shows a space-time graph resulting from a passing strategy of the AV passing ahead of the object, and Figure 6c shows a space-time graph resulting from a passing strategy of the AV passing behind the object;
Figure 7 shows a method of constructing a polygon defining a passing strategy, using the trajectory planner of Figure 1;
Figures 8a to 8d show polygons in space-time constructed by the trajectory planner of Figure 1, the polygons being for different passing strategies; and
Figure 9 shows a polygon in space-time constructed by the trajectory planner to exclude unreachable regions.

### DESCRIPTION OF EMBODIMENTS

The embodiments described herein are embodied as sets of instructions stored as electronic data in one or more storage media. Specifically, the instructions may be provided on a transitory or non-transitory computer-readable media. When the instructions are executed by a processor, the processor is configured to perform the various methods described in the following embodiments. In this way, the methods may be computer-implemented methods. In particular, the processor and a storage including the instructions may be incorporated into a vehicle. The vehicle may be an AV.

Whilst the following embodiments provide specific illustrative examples, those illustrative examples should not be taken as limiting, and the scope of protection is defined by the claims.

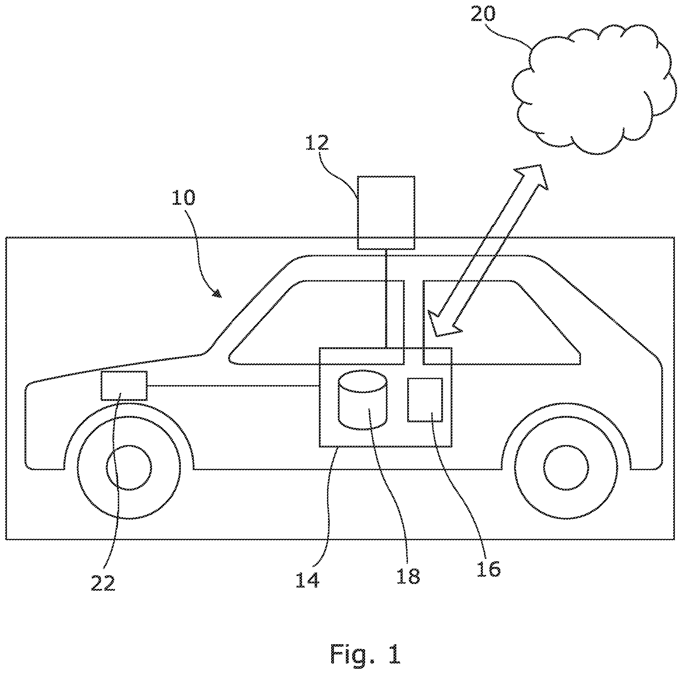

With reference to Figure 1, an AV 10 may include a plurality of sensors 12. At least some of the sensors 12 may be mounted on a roof of the AV 10. The sensors 12 may be communicatively connected to a computer 14. The computer 14 may be onboard the AV 10. The computer 14 may include a processor 16 and a memory 18. The memory may include the non-transitory computer-readable media described above. Alternatively, the non-transitory computer-readable media may be located remotely and may be communicatively linked to the computer 14 via the cloud 20. The computer 14 may be communicatively linked to one or more actuators 22 for control thereof to move the AV 10. The actuators may include, for example, a motor, a braking system, a power steering system, etc.

The sensors 12 may include various sensor types. Examples of sensor types include LiDAR sensors, RADAR sensors, and cameras. Each sensor type may be referred to as a sensor modality. Each sensor type may record data associated with the sensor modality. For example, the LiDAR sensor may record LiDAR modality data. Other sensors may include inertial measurement units (IMUs).

The sensor data may capture various scenes that the AV 10 encounters. For example, a scene may be a visible scene around the AV 10 and may include roads, buildings, weather, objects (e.g. other vehicles, pedestrians, animals, etc.), etc.

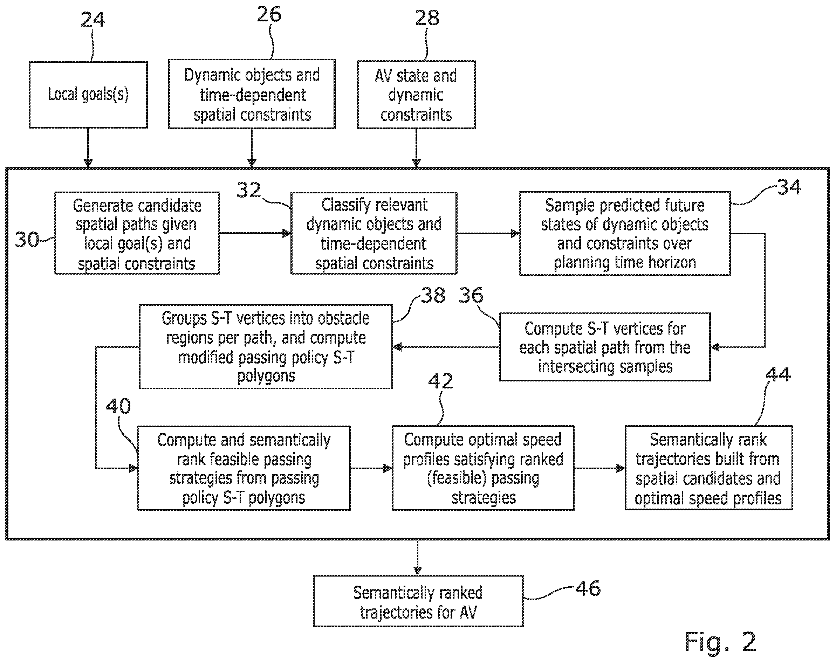

Figure 2 shows a flow chart of a method performed when the processor executes the instructions from the storage media. The instructions perform the method. The method may be called a trajectory planner when embodied as computer executable instructions, or a method of determining a trajectory for the AV.

Figure 2 shows three inputs. The inputs include local goal(s) 24, dynamic objects and time-dependent spatial constraints 26, and AV state and dynamic constraints 28. The inputs may be derived, at least in part, by the sensor data.

The local goal(s) 24 may include for example a destination for the AV 10 to reach. The destination may have been input by a user, e.g. using a user interface.

The dynamic objects may be objects in the vicinity of the AV 10 that are moving. A trajectory is predicted for each dynamic object using positional information of the object. The time-dependent spatial constraints include regions where the AV 10 may or may not be able to access at different points in time. The accessibility may change temporally. For example, pedestrian traffic lights may permit access of the AV 10 when the lights are on green and apply a constraint of denying access to the AV 10 when the lights are on red.

The AV state and dynamic constraints include AV positional information (e.g. its position in coordinates) and maximum dynamic parameter limits. Examples of dynamic constraints include maximum speed, maximum acceleration, maximum deceleration, and maximum jerk.

At step 30, the method comprises generating candidate spatial paths given local goal(s) and spatial constraints. The term "path" is described in more detail below.

At step 32, the method comprises classifying relevant dynamic objects and time-dependent spatial constraints.

At step 34, the method comprises sampling predicted future states of dynamic objects and constraints over a planning time horizon. Samples may be taken periodically. The future states may include predicted trajectories of the dynamic objects.

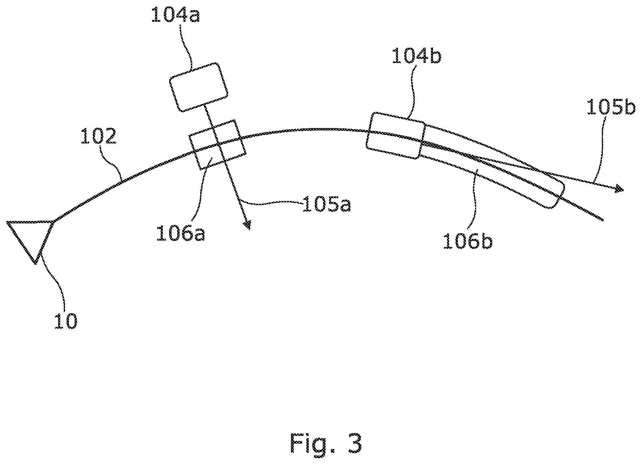

At step 36, the method comprises computing space-time (S-T) vertices for each candidate spatial path from intersecting samples. Computing S-T vertices may be understood more clearly with reference to Figures 3 to 6c.

With reference to Figure 3, the AV 10 may travel along a candidate path 102 and may encounter a first object 104a, and a second object 104b. The first and second objects 104a, 104b, may be the same object that has moved off and then returned to the candidate path at a future point in the planning time horizon or they may be different objects. The first object 104a has a predicted trajectory 105a that intersects the path 102 at a future time point. This is shown as the first intersection point 106a. If the AV 10 avoids the intersection point 106a, the AV 10 may encounter the second object 104b depending upon the relative speed of the AV 10 compared to the second object 104b. The future position of the second object 104b is determined using a predicted trajectory 105b obtained at step 34. The path 102 intersects the predicted trajectory 105b of the second object 104b for a time period and thus may be considered an intersection region 106b. Since the future positions of the objects 104a, 104b are determined from samples, in practice, the intersection region may be represented by a plurality of intersection points.

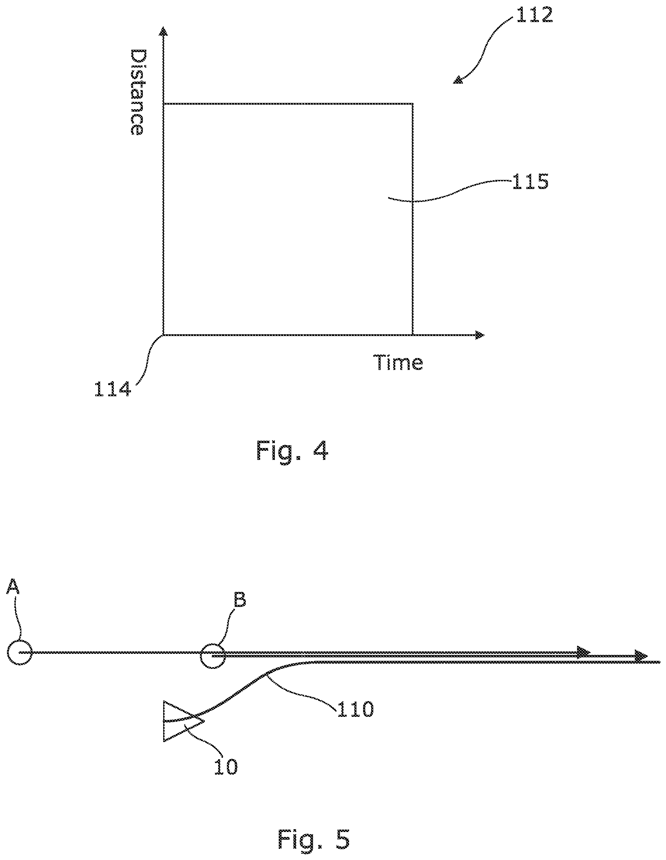

With reference to Figure 4, each candidate path may be plotted using an S-T graph. In this way, the path is transformed, including objects intersecting the path, into a space-time graph. The space-time graph has space, or distance, along a y-axis, and time along an x-axis. The inverse (y-axis corresponding to time and an x-axis corresponding to distance) may also be used but is less preferable because it may result in gradients tending to infinity as the speed of the AV 10 approaches zero. The distance is the distance along the path. The time is the planning time horizon of the AV. The AV 10 is located initially at a reference point. The reference point may be the origin 114 of the space-time graph 112. A polygon 115 is constructed within the space-time graph. The polygon defines a travel envelope defining boundaries within which the AV's 10 trajectory must remain. In other words, the trajectory planner may choose a trajectory from a plurality of different trajectories from within the polygon.

Passing strategies are computed. The AV must avoid intersection points with other objects. To do this, a passing strategy is devised. A passing strategy is constructed with a plurality of passing actions. A passing action defines how the AV passes an object. A passing action has a binary value and includes a passing action to "pass ahead" and a passing action to "pass behind" the object. A passing strategy has a plurality of combinations of passing actions when there is more than one object in the path. In a passing strategy, the passing actions may be satisfied simultaneously. The passing strategies may include an exhaustive combination of passing actions. The number of passing strategies may be equal to 2^{N}, where N is the number of objects that the AV may pass along the path. In other words, there may be 2^{N} different passing strategies that the AV can choose from in order to traverse the path.

With reference to Figure 5, travel along a candidate path may require the AV 10 to merge lanes. In this example embodiment there are two objects in the path. A first object A is another vehicle. A second object B is another vehicle. When merging lanes, the AV 10 needs to determine which passing strategy is best. However, there are some passing strategies that are not feasible, or not possible. For example, the possible passing strategies include:
1 Pass Ahead (A) and Pass Ahead (B)
2 Pass Ahead (A) and Pass Behind (B)
3 Pass Behind (A) and Pass Ahead (B)
4 Pass Behind (A) and Pass Behind (B)

It should be appreciated that passing strategy 1 is feasible, and is the passing strategy shown in Figure 5. It should be appreciated that passing strategies 2 and 4 are also feasible. However, passing strategy 3 is infeasible because it is not possible for the AV 10 to pass behind object A and pass ahead of object B simultaneously.

For the AV 10 to determine which passing strategies are feasible and infeasible, and select an optimal passing strategy from the feasible passing strategies, the trajectory planner uses the space-time graph 112, as shown in Figure 4.

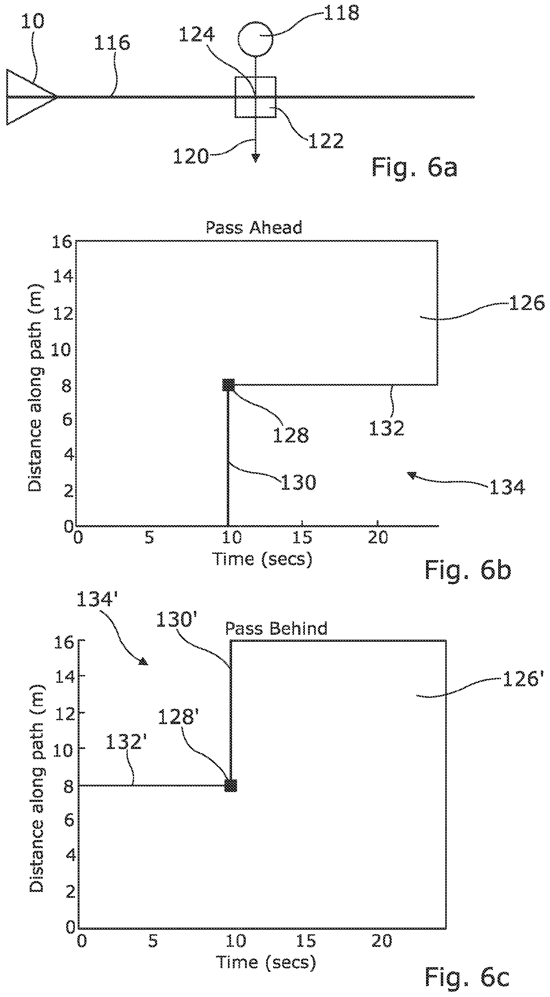

With reference to Figure 6a, the AV 10 is shown with reference to a candidate path 116. Along the candidate path 116, an object 118 having a predicted trajectory 120, may cross the path 116. The intersection region 122 may be an intersection point 124 in this example embodiment due to the speed of the object 118 and the AV 100 and the inclination of intersection. This is because the intersection points are sampled. Small intersection regions may have fewer sample intersection points than larger intersection regions. In some embodiments, even a single point may define an intersection region 122. This may be because the object 118 and the AV 10 can be modelled as having non-zero dimensions. Therefore, each intersection point 124 may be used to generate an intersection region 122 by applying an offset of +/- a spatial dimension. The offset may be determined based on a shape of the object and/or a shape of the AV 10. The offset may not or may not be symmetrical depending on the shape of the object.

There are two passing strategies available to pass the single object 118. Those passing strategies are for the AV 10 to "pass ahead" of the object 118, or for the AV 10 to "pass behind" the object 118.

With reference to Figure 6b, a polygon 126 is constructed for the passing strategy "pass ahead". The polygon 126 is constructed by adding a vertex 128 at the intersection point 124 in space-time. A first boundary line 130 is added in a y-axis direction and the vertex 128 to limit the polygon to include only space-time regions where the AV 10 passes in front of the object 118. The first boundary line may intersect the x-axis and the vertex 128. The first boundary line 130 may be an ascending line in the y-axis direction towards the vertex 128. The first boundary line may be vertical. A second boundary line 132 is added in an x-axis direction, again to limit the AV 100 to passing ahead of the object 118. The second boundary line 132 may be an ascending line in the x-axis direction from the vertex 128. The second boundary line 132 may intersect the y-axis and the vertex 128. The first boundary line 130 and the second boundary line 132 cooperate to form an incompatible region 134. The incompatible region 134 is a region that is incompatible with the passing strategy and includes space-time coordinates that would prevent the AV 10 from implementing the passing strategy, namely passing ahead of the object 118.

With reference to Figure 6c, a polygon 126' is constructed for the passing strategy "pass behind". The vertex 128' is added at the same space-time coordinates as in Figure 6b, because the intersection point is temporally the same. As described above, because the intersection points may be considered intersection regions, the actual point of intersection may be different due to the offset applied to account for the shape of the object. Because Figure 6c relates to the passing strategy "pass behind", the first boundary line 130' is a descending line in the y-axis direction towards the vertex 128'. The second boundary line 132' is a descending line in the x-axis direction from the vertex 128'. In this way, the first boundary line 130' and the second boundary line 132' cooperate to form an incompatible region 134'. The incompatible region 134' is a region that is incompatible with the passing strategy and includes space-time coordinates that would prevent the AV 100 from implementing the passing strategy, namely passing behind the object 118.

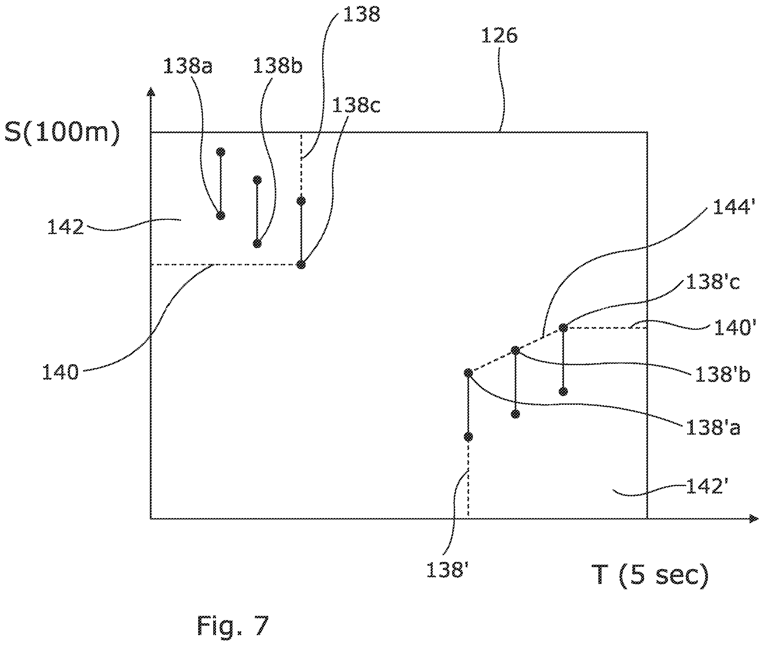

With further reference to Figure 2, at step 38 the method comprises grouping S-T vertices into obstacle regions per path and computing modified passing policy S-T polygons. This is best explained with reference to Figure 7.

With reference to Figure 7, a method of constructing a polygon 126 for a plurality of moving objects, for example, two objects. For a first object, three sample intersection points 138 a, b, c, have been identified within the space-time space. Those three intersection points 138 a, b, c, are grouped to form an obstacle region. A vertex is added for each sample intersection point 138 a, b, c. In this embodiment, the samples are samples of a predicted trajectory of a first object. The samples in this embodiment indicate that the first object has a predicted trajectory that is moving toward the AV as the distance is reducing over time. The trajectory planner constructs a first boundary line 138 and a second boundary line 140 for each sample intersection point 138 a, b, c. Any first and second boundary lines 138, 140, within a resulting incompatible region 142 are disregarded.

For the second object, there are also three sample intersection points 138' a, b, c. The sample intersection points 138' a, b, c, indicate that the second object is moving away from the AV as the distance of the sample points increases over time. To pass ahead of the second object, for example, a first boundary line 138' is constructed for each sample intersection point 138' a, b, c. In addition, a second boundary line 140' is constructed for each sample intersection point 138' a, b, c. Because none of the vertices are concealed by a resulting incompatible region formed from the other vertices, the three vertices are joined with a third boundary line 144'.

All samples within the same obstacle region may be collectively assigned the same passing action, e.g. pass ahead or pass behind. It will be appreciated that each sample is assigned an offset of +/- a spatial value. The offset may be symmetrical or asymmetric. In this way, samples of objects can be modelled as dimensionless points, and dimensions of the objects can be accounted for using the offsets. In this way, each intersection point in Figure 6 is shown as a bar between two end points. As a result, if the passing action is to pass ahead of an object, a different end point may be used as the intersection point compared to when the passing action is to pass behind the object.

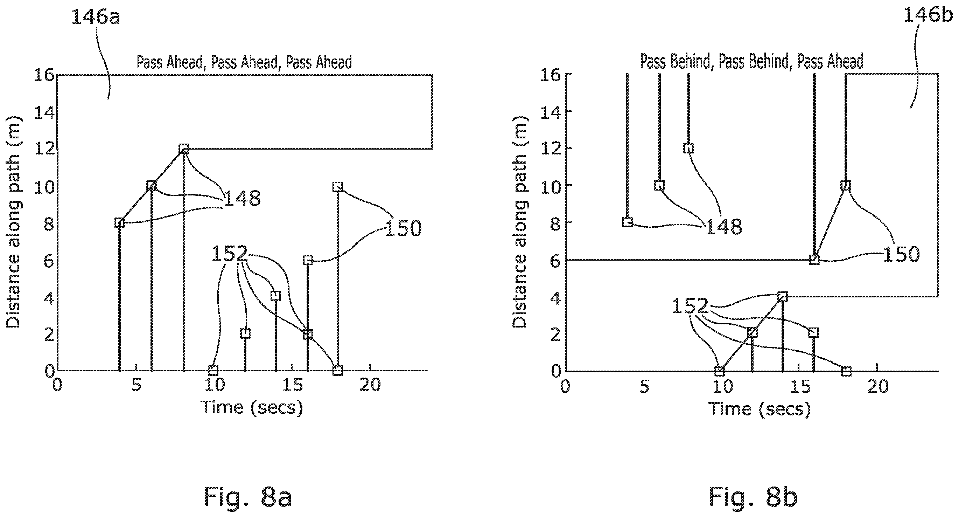

With further reference to Figure 2, at step 40, the method further comprises computing and semantically ranking feasible passing strategies from passing policy S-T polygons. This is shown more clearly in Figures 8a to 8d.

Figures 8a to 8d show polygons constructed for various passing strategies for travelling along a path containing three moving objects each with a predicted trajectory. As explained above, in other embodiments, a different number of objects may be represented. Those objects include a first object 148 moving away from the AV. Three sample intersection points have been obtained for the first object 148. Those objects also include a second object 150. The second object 150 is moving away from the AV at a faster speed than the first object 148. Two sample intersection points have been obtained for the second object 150. Those objects also include a third object 152. The third object 152 begins moving away from the AV and then moves towards the AV. Five sample intersection points have been obtained for the third object 152.

With reference to Figure 8a, the trajectory planner constructs a polygon 146a for a first passing strategy. The path length is 16 meters in an example embodiment, which may be more or less depending on various factors. The aim for the AV is to travel from the origin of the space-time graph to the end of the path and avoid collisions with each obstacle region in the space-time space. The first passing strategy includes three passing actions, one passing action associated with each object 148, 150, 152. The first passing action is to pass ahead of the first object 148. The second passing action is to pass ahead of the second object 150. The third passing action is to pass ahead of the third object 152.

By following the polygon constructing method outlined with reference to Figure 7, the trajectory planner constructs a polygon 146a defining a travel envelope. With reference to Figure 8a, the polygon 146a is able to reach the end of the path whilst following the constraints of the first passing strategy.

With reference to Figure 8b, the trajectory planner constructs a polygon 146b for a second passing strategy. The path is the same path as in Figure 8a. The second passing strategy includes three passing actions, one passing action associated with each object 148, 150, 152. The first passing action is to pass behind the first object 148. The second passing action is to pass behind the second object 150. The third passing action is to pass ahead of the third object 152.

By following the polygon constructing method outlined with reference to Figure 7, the trajectory planner constructs a polygon 146b defining a travel envelope. With reference to Figure 8b, the polygon 146b enables the AV to reach the end of the path whilst following the constraints of the second passing strategy.

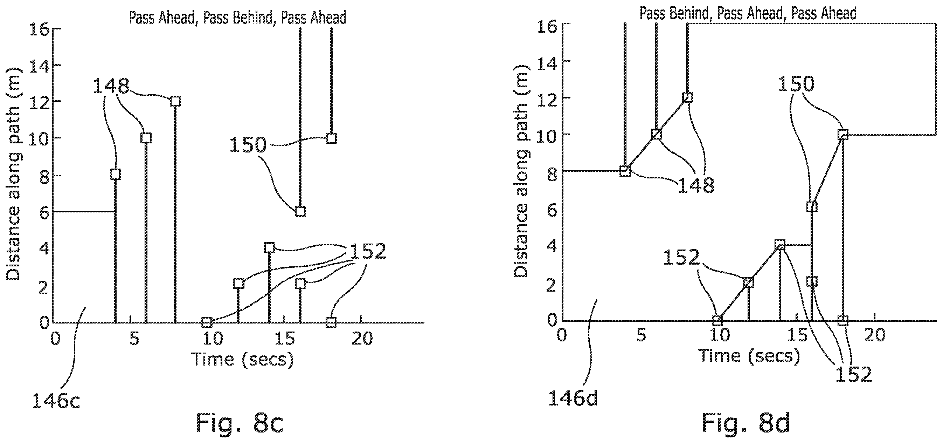

With reference to Figure 8c, the trajectory planner constructs a polygon 146c for a third passing strategy. The path is the same path as in Figures 8a and 8b. The third passing strategy includes three passing actions, one passing action associated with each object 148, 150, 152. The first passing action is to pass ahead of the first object 148. The second passing action is to pass behind the second object 150. The third passing action is to pass ahead of the third object 152.

By following the polygon constructing method outlined with reference to Figure 7, the trajectory planner constructs a polygon 146c defining a travel envelope. With reference to Figure 8c, the polygon 146c does not enable the AV to reach the end of the path whilst following the constraints of the third passing strategy.

With reference to Figure 8d, the trajectory planner constructs a polygon 146d for a fourth passing strategy. The path is the same path as in Figures 8a to 8c. The fourth passing strategy includes three passing actions, one passing action associated with each object 148, 150, 152. The first passing action is to pass behind the first object 148. The second passing action is to pass ahead of the second object 150. The third passing action is to pass ahead of the third object 152.

By following the polygon constructing method outlined with reference to Figure 7, the trajectory planner constructs a polygon 146d defining a travel envelope. With reference to Figure 8d, the polygon 146d enables the AV to reach the end of the path whilst following the constraints of the second passing strategy.

It should be appreciated that the passing strategies shown in Figures 8a to 8d are feasible passing strategies. Infeasible passing strategies are not shown. An infeasible passing strategy is a passing strategy where the polygon does not include the origin.

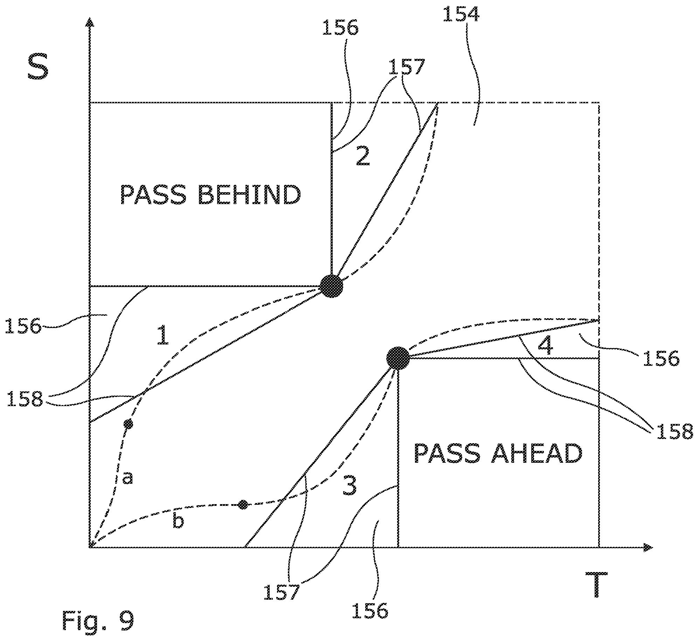

With reference to Figure 9, in line with the invention as defined in claim 1, the method comprises modifying a polygon 154 in space-time to exclude one or more unreachable regions 156. In this way, the trajectory planner shrinks the polygon. In Figure 9, four unreachable regions are shown. An unreachable region 156 is defined as a region that the AV is able to move into to satisfy the constraints of a passing strategy but is unable to move into due to constraints of the AV. The constraints of the AV includes kinodynamic constraints. kinodynamic constraints include maximum speed, maximum acceleration, maximum deceleration, etc. Other constraints may also be used including maintenance constraints, and comfort constraints. Maintenance constraints include implications of wear on components of the AV. Comfort constraints include jerk, which is a derivative of acceleration. The unreachable regions 156 are thus formed by adjusting positions of first and second boundary lines 157, 158. Whilst the adjusted boundary lines 157, 158, are shown as straight lines in Figure 9, they may also be non-linear.

Once the polygon for each feasible passing strategy has been obtained, the passing strategies are ranked. Ranking is performed by comparing various features from the polygons. Those features may be geometric features. The geometric features may include area of the polygon, width of a pinch point, and how far along the path the polygon progresses. A pinch point may be defined as the narrowest section on a path. When the passing strategies have been ranked, the passing strategy with the highest rank (e.g. ranked first) is selected. For instance, a polygon with a large area will have a higher rank than a polygon with a small area and vice versa. In addition, a polygon with a narrow pinch point will have a lower rank than a polygon with a wide pinch point. In addition, a polygon which does not reach the end of the path, e.g. Figure 8c, will be ranked lower than the polygons of 7a, b, and d. The geometric features, and the reachability of the destination may represent different ranking factors. Each ranking factor may be associated with a weight, to indicate the importance of this factor in determining the overall rank.

With further reference to Figure 2, at step 42, the method further comprises computing optimal speed profiles satisfying ranked (feasible) passing strategies.

A plurality of trajectories may be built within the feasible passing strategies. The speed profile may include spatial coordinates, of a spatial candidate, within the polygon and corresponding speed values along the spatial candidate. An optimal speed profile is obtained using an optimisation algorithm to identify a minimum.

At step 44, the method further comprises semantically ranking trajectories built from spatial candidates and optimal speed profiles. In other words, the method ranks the plurality of trajectories. The ranking may include ranking based on kinodynamic parameters and/or comfort parameters. For example, the ranking may include ranking trajectories in terms of how quickly the AV will reach its destination. Comfort parameters may include closeness of the AV to passing objects, or the degree of braking or accelerating required to achieve traversal of the trajectory. Those trajectories are semantically ranked to obtain a highest ranked trajectory. While the trajectories may be obtained for all feasible passing strategies, in certain embodiments, trajectories for the highest ranked passing strategy only are obtained to locate the optimal passing strategy.

At step 46, the semantically ranked trajectories are used by the AV 10. In particular, the highest ranked trajectory is output to the actuator 22 (Figure 1) of the AV 10 to control the AV 10 to move along the trajectory.

## Claims

1. A computer-implemented method of determining a trajectory of an autonomous vehicle (10), the method comprising:
receiving a candidate path for the autonomous vehicle (10) to travel, and positional information of one or more objects (148, 150, 152);
determining a plurality of passing strategies, each passing strategy comprising a passing action defining how the autonomous vehicle (10) is constrained to pass the or each object;
ranking the plurality of passing strategies;
determining a trajectory along the path for a highest ranked passing strategy
wherein the determining the plurality of passing strategies comprises constructing, for each passing strategy, a polygon (154) in space-time, wherein the polygon (154) comprises one or more boundary lines formed from intersection points of the autonomous vehicle (10) with the or each object, wherein the polygon (154) is a travel envelope for the autonomous vehicle (10);
wherein the computer implemented method further comprises determining one or more unreachable regions (156) of the polygon (154), wherein an unreachable region (156) is a region of the polygon (154) that the autonomous vehicle (10) is unable to reach; and
further comprising shrinking the polygon (154) to exclude the or each unreachable region (156).

2. The computer-implemented method of Claim 1, wherein the passing action includes a constraint to pass ahead of or pass behind an object of the one or more objects (148, 150, 152).

3. The computer-implemented method of Claim 1 or Claim 2, wherein exhaustive combinations of passing actions form the passing strategies.

4. The computer-implemented method of Claim 1, wherein the or each unreachable region is determined based on kinodynamic constraints of the autonomous vehicle (10).

5. The computer-implemented method of Claim 4, wherein the kinodynamic constraints include one or more from a list including: maximum speed, maximum acceleration, and maximum deceleration.

6. The computer-implemented method of any of Claims 1, 4, or 5, wherein ranking the passing strategies comprises comparing geometric features of each polygon (154) and ranking the passing strategies based on the comparisons.

7. The computer-implemented method of Claim 6, wherein the geometric features include an area of the polygon (154) and a width of a pinch point.

8. The computer-implemented method of any of Claims 1 or 4 to 7, further comprising disregarding a passing strategy as infeasible when the respective polygon (154) does not include the autonomous vehicle (10) at the original of the polygon (154).

9. The computer-implemented method of any preceding claim, wherein the positional information includes a predicted trajectory (105a, 105b) of the object.

10. A transitory or non-transitory computer-readable medium, including instructions stored thereon that, when executed by a processor (16), cause the processor (16) to perform the method of any preceding claim.

11. An autonomous vehicle (10), comprising:
a processor (16);
a storage medium having instructions stored thereon that, when executed by the processor (16), cause the processor (16) to perform the method of any of Claims 1 to 9; and
one or more actuators (22) configured to manoeuvre the autonomous vehicle (10) along the trajectory.

## Patentansprüche

1. Computerimplementiertes Verfahren zur Bestimmung einer Trajektorie eines autonomen Fahrzeugs (10), wobei das Verfahren Folgendes umfasst:
Empfangen eines Kandidatenpfads für das autonome Fahrzeug (10) zum Befahren und von Positionsinformationen eines oder mehrerer Objekte (148, 150, 152);
Bestimmen einer Vielzahl von Vorbeifahrstrategien, wobei jede Vorbeifahrstrategie eine Vorbeifahraktion umfasst, die definiert, wie das autonome Fahrzeug (10) eingeschränkt ist, an dem oder jedem Objekt vorbeizufahren;
Rangordnen der Vielzahl von Vorbeifahrstrategien;
Bestimmen einer Trajektorie entlang des Pfades für eine höchstrangige Vorbeifahrstrategie,
wobei das Bestimmen der Vielzahl von Vorbeifahrstrategien das Konstruieren eines Polygons (154) im Raum-ZeitBereich für jede Vorbeifahrstrategie umfasst, wobei das Polygon (154) eine oder mehrere Randlinien umfasst, die aus Schnittpunkten des autonomen Fahrzeugs (10) mit dem oder jedem Objekt gebildet sind, wobei das Polygon (154) eine Fahrumhüllung für das autonome Fahrzeug (10) ist;
wobei das computerimplementierte Verfahren ferner das Bestimmen eines oder mehrerer nicht erreichbarer Regionen (156) des Polygons (154) umfasst, wobei eine nicht erreichbare Region (156) eine Region des Polygons (154) ist, die das autonome Fahrzeug (10) nicht erreichen kann; und
ferner umfassend ein Verkleinern des Polygons (154), um die oder jede nicht erreichbare Region (156) auszuschließen.

2. Computerimplementiertes Verfahren nach Anspruch 1, wobei die Vorbeifahraktion eine Einschränkung zum Vorbeifahren vor oder Vorbeifahren hinter einem Objekt des einen oder der mehreren Objekte (148, 150, 152) beinhaltet.

3. Computerimplementiertes Verfahren nach Anspruch 1 oder Anspruch 2, wobei erschöpfende Kombinationen von Vorbeifahraktionen die Vorbeifahrstrategien bilden.

4. Computerimplementiertes Verfahren nach Anspruch 1, wobei die oder jede nicht erreichbare Region basierend auf kinodynamischen Einschränkungen des autonomen Fahrzeugs (10) bestimmt wird.

5. Computerimplementiertes Verfahren nach Anspruch 4, wobei die kinodynamischen Einschränkungen eine oder mehrere aus einer Liste beinhalten, die Folgendes beinhaltet: maximale Geschwindigkeit, maximale Beschleunigung und maximale Verzögerung.

6. Computerimplementiertes Verfahren nach einem der Ansprüche 1, 4 oder 5, wobei das Rangordnen der Vorbeifahrstrategien das Vergleichen geometrischer Merkmale jedes Polygons (154) und das Rangordnen der Vorbeifahrstrategien basierend auf den Vergleichen umfasst.

7. Computerimplementiertes Verfahren nach Anspruch 6, wobei die geometrischen Merkmale eine Fläche des Polygons (154) und eine Breite einer Engstelle beinhalten.

8. Computerimplementiertes Verfahren nach einem der Ansprüche 1 oder 4 bis 7, ferner umfassend ein Verwerfen einer Vorbeifahrstrategie als nicht durchführbar, wenn das jeweilige Polygon (154) das autonome Fahrzeug (10) im ursprünglichen Polygon (154) nicht beinhaltet.

9. Computerimplementiertes Verfahren nach einem der vorhergehenden Ansprüche, wobei die Positionsinformationen eine vorhergesagte Trajektorie (105a, 105b) des Objekts beinhalten.

10. Flüchtiges oder nichtflüchtiges computerlesbares Medium, auf dem Anweisungen gespeichert sind, die, wenn sie durch einen Prozessor (16) ausgeführt werden, bewirken, dass der Prozessor (16) das Verfahren nach einem vorhergehenden Anspruch durchführt.

11. Autonomes Fahrzeug (10), umfassend:
einen Prozessor (16);
ein Speichermedium, auf dem Anweisungen gespeichert sind, die, wenn sie durch den Prozessor (16) ausgeführt werden, bewirken, dass der Prozessor (16) das Verfahren nach einem der Ansprüche 1 bis 9 durchführt; und
einen oder mehrere Aktuatoren (22), die dazu ausgelegt sind, das autonome Fahrzeug (10) entlang der Trajektorie zu manövrieren.

## Revendications

1. Procédé mis en œuvre par ordinateur de détermination d'une trajectoire d'un véhicule autonome (10), le procédé comprenant :
la réception d'un trajet candidat pour que le véhicule autonome (10) puisse circuler, et d'informations de position d'un ou plusieurs objets (148, 150, 152) ;
la détermination d'une pluralité de stratégies de croisement, chaque stratégie de croisement comprenant une action de croisement définissant comment le véhicule autonome (10) est contraint de croiser le ou chaque objet ;
le classement de la pluralité de stratégies de croisement ;
la détermination d'une trajectoire le long du trajet pour une stratégie de croisement la mieux classée dans lequel la détermination de la pluralité de stratégies de croisement comprend la construction, pour chaque stratégie de croisement, d'un polygone (154) dans l'espace-temps, dans lequel le polygone (154) comprend une ou plusieurs lignes de limite formées de points d'intersection du véhicule autonome (10) avec le ou chaque objet, dans lequel le polygone (154) est une enveloppe de déplacement pour le véhicule autonome (10) ;
dans lequel le procédé mis en œuvre par ordinateur comprend en outre la détermination d'une ou plusieurs régions inatteignables (156) du polygone (154), dans lequel une région inatteignable (156) est une région du polygone (154) que le véhicule autonome (10) ne peut atteindre ; et
comprenant en outre le rétrécissement du polygone (154) pour exclure la ou chaque région inatteignable (156).

2. Procédé mis en œuvre par ordinateur selon la revendication 1, dans lequel l'action de croisement inclut une contrainte pour passer devant ou passer derrière un objet des un ou plusieurs objets (148, 150, 152).

3. Procédé mis en œuvre par ordinateur selon la revendication 1 ou la revendication 2, dans lequel des combinaisons exhaustives d'actions de croisement forment les stratégies de croisement.

4. Procédé mis en œuvre par ordinateur selon la revendication 1, dans lequel la ou chaque région inatteignable est déterminée sur la base de contraintes kinodynamiques du véhicule autonome (10).

5. Procédé mis en œuvre par ordinateur selon la revendication 4, dans lequel les contraintes kinodynamiques incluent un ou plusieurs éléments d'une liste incluant : vitesse maximale, accélération maximale et décélération maximale.

6. Procédé mis en œuvre par ordinateur selon l'une quelconque des revendications 1, 4 ou 5, dans lequel le classement des stratégies de croisement comprend la comparaison de caractéristiques géométriques de chaque polygone (154) et le classement des stratégies de croisement sur la base des comparaisons.

7. Procédé mis en œuvre par ordinateur selon la revendication 6, dans lequel les caractéristiques géométriques incluent une surface du polygone (154) et une largeur d'un point de pincement.

8. Procédé mis en œuvre par ordinateur selon l'une quelconque des revendications 1 ou 4 à 7, comprenant en outre le fait de ne pas prendre en compte une stratégie de croisement comme impossible lorsque le polygone (154) respectif n'inclut pas le véhicule autonome (10) à l'origine du polygone (154).

9. Procédé mis en œuvre par ordinateur selon l'une quelconque des revendications précédentes, dans lequel les informations de position incluent une trajectoire prédite (105a, 105b) de l'objet.

10. Support transitoire ou non transitoire lisible par ordinateur, sur lequel sont stockées des instructions qui, lorsqu'elles sont exécutées par un processeur (16), amènent le processeur (16) à réaliser le procédé selon l'une quelconque des revendications précédentes.

11. Véhicule autonome (10), comprenant :
un processeur (16) ;
un support de stockage sur lequel sont stockées des instructions qui, lorsqu'elles sont exécutées par le processeur (16), amènent le processeur (16) à réaliser le procédé selon l'une quelconque des revendications 1 à 9 ; et
un ou plusieurs actionneurs (22) configurés pour manœuvrer le véhicule autonome (10) le long de la trajectoire.
